# EUROPEAN PATENT APPLICATION

(11) **EP 2 042 029 A2**
(43) Date of publication of application: **01.04.2009**
(21) Application number: 08163203.6
(22) Date of filing: 28.08.2008
(51) Int. Cl.: A01G 3/00, A01D 45/28

(54) **Cutting trimmer machine and method for cutting wide-leaved vegetables**

(30) Priority: 28.09.2007 IT VI20070263
(71) Applicant: Piva, Tiziano, 35020 Arre (PD) (IT); Piva, Alberto, 35020 Arre (PD) (IT); Gallo, Nicola, 35020 Candiana (PD) (IT); Gallo, Emanuela, 35020 Candiana (PD) (IT)
(72) Inventor: Piva, Tiziano, 35020 Arre (PD) (IT); Piva, Alberto, 35020 Arre (PD) (IT); Gallo, Nicola, 35020 Candiana (PD) (IT); Gallo, Emanuela, 35020 Candiana (PD) (IT)
(74) Representative: Bonini, Ercole

(57) **Abstract**

A trimmer machine (1) for cutting the waste portion (S) protruding from the vegetative apex (A) of the vegetable (O) after harvesting of the edible part (B), comprising: a supporting structure (2) provided with rolling means (3,4); a cutting unit (5) for cutting the waste portion (S), positioned in the lower part of the supporting structure (2); a hopper (9) to contain the waste portion (S). The machine comprises a suction unit (6) positioned above the cutting unit (5) and communicating with the hopper (9) for suction of the waste portions (S).

## Description

The invention concerns a cutting trimmer machine for leaf vegetables operating at varying heights from ground level.

The invention also concerns a method for cutting wide-leaved vegetables via use of the trimmer machine of the invention.

It is known that baby leaves, for example rocket, spinach, parsley and basil, are harvested using self-propelled or trailed machines equipped with cutting blade.

Each plant is cut at a pre-set height from the ground level in order to separate the edible portion from the part that goes down into the root.

In particular, the above-mentioned edible portion must not exceed a precise height established by the national and international marketing standards and therefore the height of the part of the plant that remains in the ground after cutting varies depending on the height the plant had reached prior to cutting for harvesting.

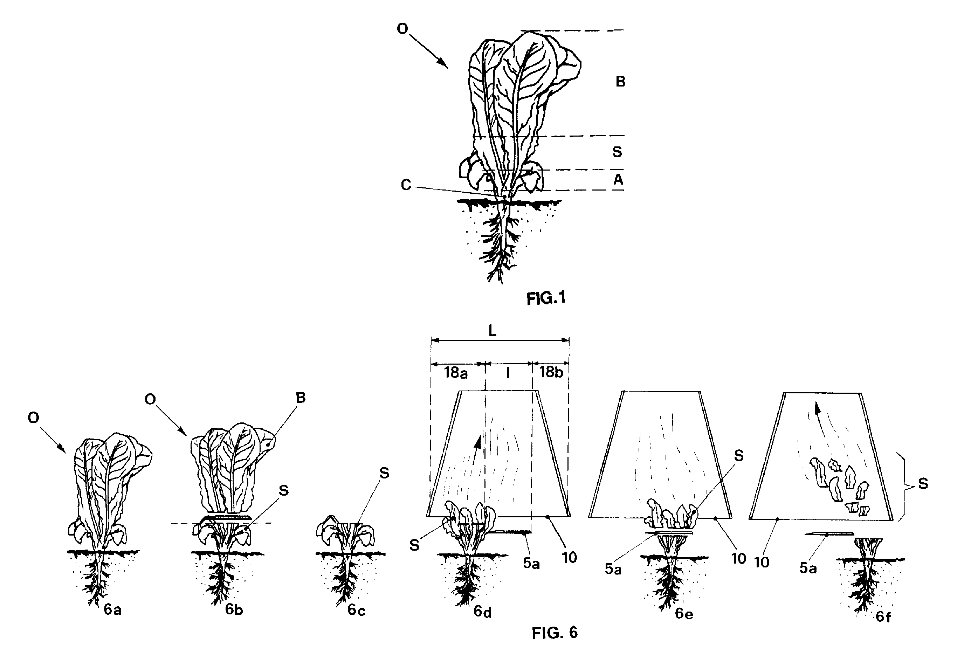

This portion of the plant which remains in the ground after cutting comprises a part **C** called "collar" which is embedded in the ground, an upper part comprising the excess leaves with respect to the edible portion **B**, here for the sake of simplicity called "waste" **S**, which are connected to each other by means of the "vegetative apex" area **A**, as can be seen in fig. 1, from which the plant can re-sprout after cutting.

During the above-mentioned re-sprouting, the collar thickens and grows, as a consequence of the spontaneous growth of the entire plant.

In said growth conditions, a further drawback consists in the fact that if the height of the blade from the ground with respect to the previous cut is maintained constant, the edible part of the plant which is harvested has a tougher portion at the bottom which affects the quality of the crop harvested.

In order to maintain the quality of the product and therefore guarantee that the part harvested is totally devoid of a tougher portion, it is necessary to increase the cutting height with respect to the ground.

In practice, in order to maintain a constant quality, the cutting height must be progressively adjusted.

This entails the drawback of loss of time during harvesting due to the need to adjust the cutting height.

Essentially, if the grower does not wish to waste time with the adjustment procedure, he is obliged to accept a reduction in product quality, whereas if he wishes to maintain a high quality, the cutting height must be adjusted.

Furthermore, since the leaves of the plant begin to grow starting from the end of the cutting area, they reach a greater length than the previous growth with a greater tendency to point downwards, especially at the time of cutting.

This results in the drawback that the position of the leaves makes harvesting difficult, requiring reduction of the machine speed.

A further drawback consists in the fact that the cut is oblique with respect to the direction of growth of the leaf.

Due to said oblique cut, a further drawback is that the cut surface in contact with the air increases, causing both a greater exposure of the plant to bacteria and a more rapid oxidisation of the product and, consequently, quicker deterioration.

A further drawback is determined by the fact that at the end of the cutting and harvesting operation, fragments of the plant, harmful insects, foreign bodies and other crop residues are left on the ground and should be removed before the subsequent re-growth.

To overcome said drawbacks, after cutting and harvesting, the sector operators generally tend to manually cut the waste, consisting of the leaves protruding from the plant above the vegetative apex.

However, said manual operation is not precise and can damage the plants in addition to not solving the drawback of having to remove from the ground crop residues, insects and any foreign bodies.

Furthermore, the additional cutting operation is time-consuming, with consequent labour costs.

The present invention aims to overcome said drawbacks.

In particular the invention aims to provide a machine and a method for the treatment of vegetable plants after harvesting, which allows re-growth always from the same point, represented by the vegetative apex.

A further object is to keep the ground clean of waste from the previous cut, harmful insects and other types of undesired residues after harvesting of the vegetable produce.

Said objects are achieved by a cutting trimmer machine having the characteristics described in the main claim.

The method for cutting the waste portion of the vegetable, by means of the trimmer machine of the invention, also forms part of the invention.

Further characteristics of the machine are described in the dependent claims.

Advantageously the machine and the method of the invention permit more rapid harvesting.

Again advantageously, the invention ensures constant quality of the product harvested.

Furthermore, the machine and the method of the invention advantageously permit improved cleaning of the ground.

A further advantage, deriving from the fact that the ground is kept cleaner by the machine of the invention, is the possibility of reducing the use of pesticides for the destruction of organisms which are harmful to the crops.

A further advantage is that by keeping the height of the plant constant, the leaves do not subsequently grow downwards but perpendicular to the ground.

For said reason advantageously the next cut of the plant is performed perpendicular to its direction of growth, reducing the risk of the entry of bacteria and limiting oxidisation of the crop.

Furthermore the machine and the method of the invention advantageously permit reduction of the duration of the cultivation cycle between one harvest and the next.

In fact, use of the machine of the invention after the first cut for harvesting permits re-use of the crops already planted, waiting only the time necessary for re-growth of the leaves, thus skipping the seeding, germination and rooting phases which necessarily precede formation of the leaves in the case of new plants.

Last but not least is the advantage consisting in the fact that the machine and the method of the invention can be used also for removal of the product if, due to market conditions, it cannot be sold.

Said objects and advantages will be better highlighted during the description of a preferred embodiment of the invention which is given below by way of nonlimiting example with reference to the accompanying drawings in which:
- fig. 1 shows a schematisation of the main parts of a generic leaf vegetable;
- fig. 2 shows an axonometric view of the trimmer machine of the invention;
- fig. 3 shows a lateral view of the machine of fig. 2 during operation;
- fig. 4 shows a frontal view of the machine of fig. 2 during operation;
- fig. 5 shows the section according to a vertical plane of the machine shown in fig. 3 during operation;
- fig. 6 shows as a whole in schematic form the succession of cutting operations with reference to the figures from 6a to 6f.

The trimmer machine of the invention is shown overall in the figures from 2 to 4 where it is indicated by **1**.

It can be observed that it comprises a supporting structure **2** provided with rolling means **3, 4,** and having in the lower part a cutting unit indicated overall by **5**, combined with a suction unit **6** for suction of the waste **S** cut.

Furthermore, the machine of the invention is also provided with a hopper **9** suitable for containing the waste leaves **S** cut by the cutting unit 5 and sucked by the suction unit **6**.

According to the invention the suction unit **6** is positioned above the cutting unit 5 and performs the suction simultaneously with cutting of the waste **S**.

As regards the supporting structure **2**, it is provided with rolling means, consisting preferably of rubber-coated wheels **3, 4** for moving the machine **1** forward over the ground **T** where the waste **S** to be cut is found.

In other variations, not shown here, the rolling means can consist of other elements with said functions of the per se known type.

As regards the cutting unit **5**, it comprises a blade **5a** positioned near the ground **T** and wound in a loop between two drums **5b, 5c** with axis of rotation parallel to the ground **T**.

In other embodiments, not shown here, the cutting unit **5** can consist of one or more rotating discs or a system with double cutting blade or different structure according to other embodiments of known type.

The cutting edge of the blade **5a** faces in the direction of forward movement of the machine and has a preferably but not necessarily serrated sharpening profile.

In other embodiments the blade can have a smooth or chamfered profile or a profile of the per se known type according to the requirements of the operator and the type of plant to be cut.

The blade **5a** is moved by drive means connected to the axis of one of the drums, for example the drum **5b**, which drive the blade **5a** by friction between the drive drum **5b** and the idle drum **5c**.

As regards the above-mentioned drive means, they are not shown in the figures but are of the per se known type and can be hydraulic or mechanical, powered independently if the machine **1** is self-propelled or powered by the drive unit of the towing means if the machine 1 is trailed.

As regards the suction unit **6** previously referred to, it comprises a suction duct 7 which has the function of conveying the waste **S** cut from the ground **T** to the above-mentioned collection hopper **9** and a suction element **8**, positioned between the suction duct **7** and the hopper **9**.

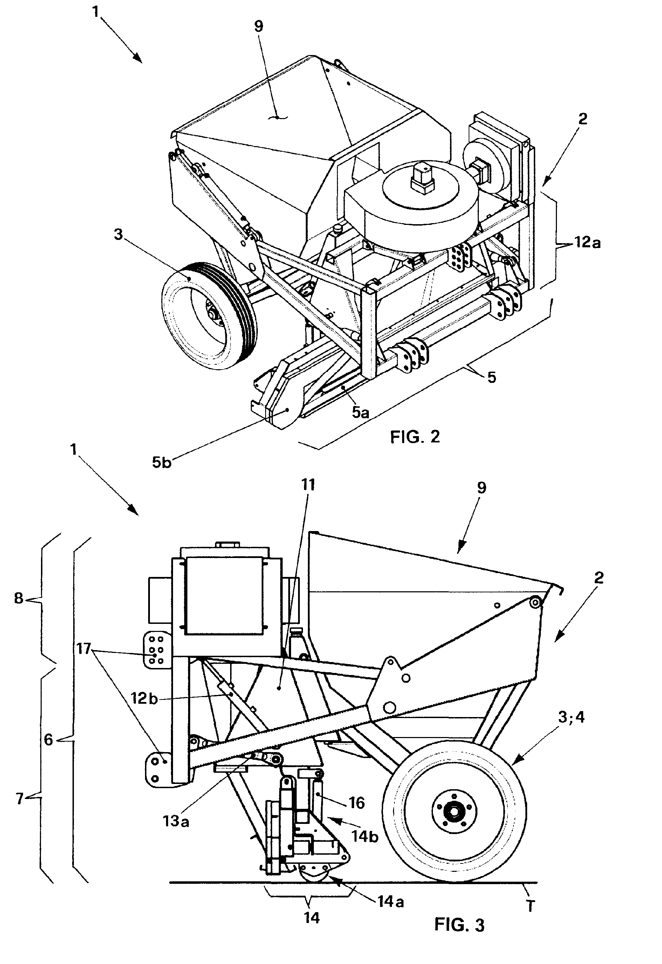

In particular, as can be seen in fig. 3, the upper end of the suction duct 7 is connected to the suction element **8**.

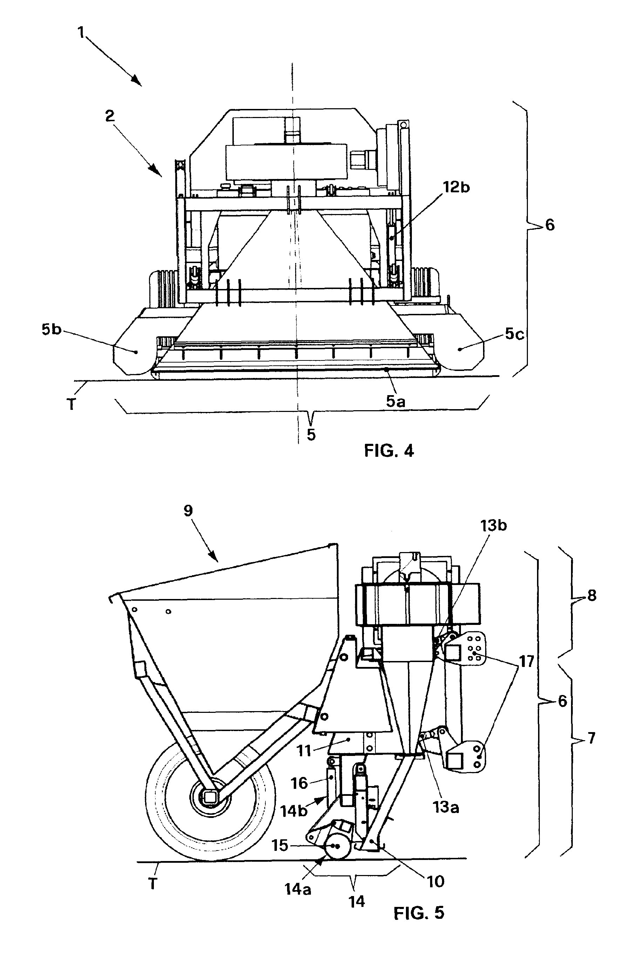

In turn the lower end of the suction duct **7**, essentially in the shape of a truncated pyramid, as can be seen in particular in fig. 4, is positioned at the level of the cutting unit **5**, so as to form a suction inlet **10** which incorporates the cutting blade **5a** inside it, to perform suction of the waste **S** simultaneously with cutting of the same.

In fact, as can be seen in fig. 6d which represents a sequence of the cutting operation, the width **L** of the suction inlet **10** is greater than the width **I** of the blade **5a** so that the suction at the level of the vegetable **O** starts a few moments before beginning of the cutting as will be illustrated in greater detail below during description of operation of the machine in question.

The cutting unit **5** and the suction unit **6** are both connected to a frame **11** which is in turn jointed to the supporting structure **2**.

In particular the frame **11** is connected to the supporting structure **2** via articulation means **12a**, which consist of a parallelogram **13** jointed to permit vertical movement, and via supporting means **12b** which have the function of discharging the weight of the frame **11** onto the supporting structure **2** so that it does not rest entirely on the ground below.

Advantageously this solution prevents the weight of the trimmer machine damaging the vegetables as it passes over them, therefore ensuring optimal conditions for the subsequent re-sprouting phase.

In the embodiment described here, said supporting means **12b** comprise oil actuators.

In other variations, not shown here, the supporting means can be fluid actuators of other types or springs or structured differently according to other known embodiments.

As regards the jointed parallelogram **13**, it consists of two pairs of tie rods **13a** and **13b**, each of which has two hinge points, one to the supporting structure **2** and one to the frame **11**.

The cutting position of the blade **5a** can be adjusted by means of a positioning unit **14** which, as can be seen in fig. 5, is combined with the cutting unit 5 and with the suction unit **6**.

In particular the positioning unit **14** allows the working position of the cutting blade **5a** to be maintained constant with respect to the ground T on the basis of the adjustment performed by the operator.

According to the preferred embodiment of the invention, said positioning unit 1**4** comprises a ground supporting device **14a** operatively connected to height adjustment means **14b**.

Preferably the ground supporting device **14a** consists of a roller **15** and the height adjustment means **14b** comprise fluid actuators **16** which permit stabilisation of the height of the blade **5a** with respect to the ground **T**.

In other embodiments, not shown here, the positioning unit **14** can consist of mechanical feelers **14a** of another type resting on the ground connected to sensor means which in turn control one or more actuators **14b** which allow the height of the blade **5a** to be maintained constant with respect to the ground **T**.

The supporting structure **2** is provided with connection means **17** for hitching to an agricultural vehicle suitable for moving it forward over the ground **T**.

In another variation, the machine can be provided with a drive unit suitable for making it self-propelled.

Operatively and according to the method of the invention, the trimmer machine is used after harvesting of the product according to the schematic sequence shown in the figures from 6a to 6f.

In particular in fig. 6a the vegetable **O** can be seen in the final growing phase in which it is cut according to the known art, as shown in fig. 6b, to harvest the edible part **B**.

It can be seen in fig. 6c that after harvesting of the product, the waste **S** remains attached to the vegetable **O** left in the ground T.

The machine of the invention operates as from the phase shown in fig. 6c in which the vegetable **O** comprising the waste **S** is left in the ground; the first operation performed, shown in fig. 6d, is straightening of the waste leaves to the vertical position.

Immediately after, as can be seen in fig. 6e, cutting and suction of the waste **S** are performed, as shown in fig. 6f.

It should be noted that the suction operation, in addition to being carried out during the cutting phase, is also performed previously and subsequently to said cutting phase.

In fact, as can be seen in fig. 6d, between the blade **5a** and the front part of the suction inlet **10** and the blade **5a** and the rear part of said suction inlet **10** there is a respective free front suction portion 18a which permits suction for straightening of the waste **S**.

Furthermore, there is a free rear suction portion **18b** for sucking in the portion of waste **S** cut, as mentioned previously.

This permits vertical straightening of the waste **S** so as to facilitate subsequent cutting in a direction perpendicular to its direction of growth and so that it can then be collected by suction.

The essentially perpendicular cut of the portion of vegetable to be discarded reduces the cut surface in contact with the air, consequently reducing the possible entry of bacteria and oxidisation of the product which would result in a more rapid deterioration thereof.

By adjusting the cutting position to the height required by the operator, the pre-established object is achieved which consists in maintaining the same quality characteristics of the edible part **B** of the vegetable **O** in the subsequent cutting and harvesting phase, since the section of vegetable **O** protruding from the ground **T** is always the same.

On the basis of the above, it can be seen that the trimmer machine and the method of the invention achieve all the pre-established objects.

In particular the invention achieves the object of providing a machine and a method for treating vegetable produce after harvesting, which permits re-sprouting always from the same point, represented by the vegetative apex.

The object of cleaning the ground before the next re-growth of the vegetables is also achieved.

The machine and the method of the invention also achieve the advantages which consist, as previously said, in avoiding a greater entry of bacteria into the vegetable and avoiding a more rapid oxidisation of the product.

A further advantage achieved consists in reduction of the use of pesticides for control and reduction of organisms that are harmful to the crops.

The advantages of avoiding downward growth of the leaves, reducing the duration of the cultivation cycle between one harvest and another and eliminating a possible surplus are furthermore achieved.

Furthermore the machine and the method of the invention achieve the advantages of maintaining the product quality constant and speeding up harvesting.

In the production phase, variations can be made to the trimmer machine and method of the invention which, although not shown and not described here, will all be considered protected by the present patent if they fall within the content of the following claims.

Where technical features mentioned in any claim are followed by reference signs, those reference sings have been included for the sole purpose of increasing the intelligibility of the claims and accordingly such reference signs do not have any limiting effect on the interpretation of each element identified by way of example by such reference signs.

## Claims

1. Trimmer machine for cutting the waste portion (S) protruding from the vegetative apex of the vegetable after harvesting of the edible part, of the type comprising:
- a supporting structure (2) provided with rolling means (3, 4);
- a cutting unit (5) for cutting said waste portion (S), positioned in the lower part of said supporting structure (2);
- a hopper (9) to contain said waste portion (S);
**characterised in that** it comprises a suction unit (6) positioned above said cutting unit (5) and communicating with said hopper (9) for the suction of said waste portions (S).

2. Machine (1) according to claim 1) **characterised in that** said cutting unit (5) comprises at least one blade (5a) positioned near the ground.

3. Machine (1) according to claim 2) **characterised in that** said blade (5a) is wound in a loop between two drums (5b, 5c).

4. Machine (1) according to claim 3) **characterised in that** each of said drums (5b, 5c) has its axis of rotation parallel to the ground (T).

5. Machine (1) according to any one of the claims from 1) to 4) **characterised in that** said suction unit (6) comprises a suction duct (7) connected to said hopper (9) by the interposition of a suction element (8).

6. Machine (1) according to claim 5) **characterised in that** said suction duct (7) has the upper end connected to the suction inlet of said suction element (8) which has the delivery outlet communicating with said hopper (9).

7. Machine (1) according to any one of the claims 5) or 6) **characterised in that** the lower end of said suction duct (7) is essentially in the shape of a truncated pyramid with larger base which defines a suction inlet (10) positioned at the level of said cutting unit (5).

8. Machine (1) according to claim 7) **characterised in that** said blade (5a) is completely contained inside said suction inlet (10).

9. Machine (1) according to any one of the claims 7) or 8) **characterised in that** the width (I) of said blade (5a) is inferior to the width (L) of said suction inlet (10) to define a free front suction portion (18a) and a free rear suction portion (18b).

10. Machine (1) according to any one of the preceding claims **characterised in that** it comprises a frame (11) which supports said cutting unit (5) and said suction unit (6) and is connected to said supporting structure (2) by means of at least one jointed parallelogram (13) for the vertical movement and supporting means (12b) for discharging the weight of said frame (11) onto said supporting structure (2).

11. Machine (1) according to claim 10) **characterised in that** said supporting means (12b) comprise shock absorbing means.

12. Machine (1) according to claim 11) **characterised in that** said shock absorbing means are fluid shock absorbers.

13. Machine (1) according to claim 11) **characterised in that** said shock absorber means are spring shock absorbers.

14. Machine (1) according to any one of the claims from 10) to 13) **characterised in that** it comprises a jointed parallelogram positioned on each side of the supporting structure (2) comprising a pair of tie rods (13a, 13b), each having a first point hinged to said supporting structure (2) and a second point hinged to said frame (11).

15. Machine (1) according to any one of the preceding claims **characterised in that** it comprises a positioning unit (14) supported by said supporting structure (2) and combined with said cutting unit (5) and with said suction unit (6) and provided with ground support means (14a) operationally connected to height adjustment means (14b) of said cutting unit (5) and said suction unit (6).

16. Machine (1) according to claim 15) **characterised in that** said ground supporting means (14a) comprise at least one roller (15).

17. Machine (1) according to claim 15) **characterised in that** said ground supporting means (14a) comprise at least one mechanical feeler resting on the ground connected to sensor means.

18. Machine (1) according to any one of the claims from 15) to 17) **characterised in that** said height adjustment means (14b) are actuator means operationally connected to said ground supporting means (14a).

19. Machine (1) according to claim 18) **characterised in that** said actuator means are fluid actuators.

20. Machine (1) according to any one of the preceding claims **characterised in that** said supporting structure (2) comprises connection means (17) to towing means.

21. Machine (1) according to any one of the claims from 3) to 20) **characterised in that** said blade (5a) has a serrated profile.

22. Machine (1) according to any one of the claims from 3) to 20) **characterised in that** said blade (5a) has a chamfered profile.

23. Machine (1) according to any one of the preceding claims **characterised in that** said rolling means (3, 4) are rubber-coated wheels.

24. Method for cutting the waste portion (S) protruding from the vegetative apex of the vegetable after harvesting of the edible part via the use of a trimmer machine of the type comprising:
- a supporting structure (2) provided with rolling means (3, 4);
- a cutting unit (5) for cutting said waste portion (S), positioned in the lower part of said supporting structure (2);
- a hopper (9) to contain said waste portion (S);
**characterised in that** said suction operation of said waste portion (S) performed by said suction unit (6) occurs during said cutting operation of said waste portion (S) performed by said cutting unit (5).

25. Method according to claim 24) **characterised in that** said suction operation of said waste portion (S) occurs also previously and subsequently to said cutting operation of said waste portion (S).
